# EUROPEAN PATENT SPECIFICATION

(11) **EP 1 874 126 B1**
(45) Date of publication and mention of the grant of the patent: **28.07.2010**
(21) Application number: 06758492.0
(22) Date of filing: 21.04.2006
(51) Int. Cl.: A23G 4/04, A23G 4/14, A23G 4/16

(54) **SHAPED CHEWING GUM PRODUCTS CONTAINING SOLUBLE PROTEIN AND METHODS OF MAKING SAME**
GEFORMTE KAUGUMMIPRODUKTE, DIE LÖSLICHES PROTEIN ENTHALTEN, SOWIE VERFAHREN ZU IHRER HERSTELLUNG
PRODUITS GOMMES A MACHER MOULES CONTENANT UNE PROTEINE SOLUBLE ET LEURS PROCEDES DE PRODUCTION

(30) Priority: 29.04.2005 US 676103 P
(43) Date of publication of application: 09.01.2008
(73) Proprietor: WM. WRIGLEY JR. COMPANY, Chicago, Illinois 60611 (US)
(72) Inventor: FRITZ, Douglas, P., Wilmington, North Carolina 28409 (US); FERRER, Ana Cristel, E-08012 Barcelona (ES)
(74) Representative: Hayes, Adrian Chetwynd
(86) International application number: PCT/US2006/015213
(87) International publication number: WO 2006/118828

(56) References cited:
- EP-A- 0 425 081
- US-A- 3 912 817
- US-A- 4 479 969
- US-A- 5 286 502
- US-A- 5 366 740
- US-A- 5 433 960

## Description

### RELATED APPLICATION

The present application claims the benefit under 35 U.S.C. § 119(e) of Provisional U.S. Patent Application Serial No. 60/676,103, filed April 29, 2005; which is hereby incorporated by reference in its entirety.

### BACKGROUND OF THE INVENTION

The present invention relates to chewing gum products and methods of making chewing gum products. Specifically, the present invention relates to chewing gum compositions that can be shaped in a mold, such as by being deposited, to provide intricate shapes, and the methods of making the compositions and products made using the compositions.

Chewing gum is most typically found in rather plain shaped products, such as flat sticks, tabs, chunks, cylinders or pellets. Chewing gum compositions are typically rolled into sheets and scored into sticks, or extruded into ropes and cut into chunks before being wrapped, or pressed into pellets and coated. However, none of these processes allow the chewing gum product to be made into more complicated and interesting shapes.

Another way of making chewing gum products is to use stamping technology. This allows for more interesting shapes, but has a number of drawbacks. First, the mold cavity in which the product is formed cannot have too deep of relief or the product cannot be easily removed from the mold without having its shape distorted. More importantly, the mold tooling is fairly expensive, and hence not easy to change. Thus, it has not been worthwhile to make chewing gum products into a shape for specific holidays, which would need to be changed after just a few weeks of production. Also, if a multi-colored product is desired, it becomes very difficult to make such a product consistently with stamping technology.

Many confectioneries are made in interesting and intricate shapes using depositing. In one example of this process, a bed of powdered material, such as starch, has a depression made in it by a positive of the desired shape. The depression formed in the powder material is a negative of the shape. Liquid confectionery material is deposited in the depression, and then solidifies to the point that the powder material can be removed, leaving the shape in the positive image of the depression. The powder material is reused. If a new shape is desired, the mold face can be changed. However, because one mold face can be used to make literally millions of depressions, the number of mold faces that need to be changed is relatively few, and the mold faces can be made of a material that is inexpensive and easy to shape in the first place, such as plaster, because the mold does not have to withstand the pressures induced in stamping technology.

Heretofore, there has not been a chewing gum composition used to make a deposited, shaped product that has had wide spread commercial acceptance. By its very nature, chewing gum must include an elastomer and other water-insoluble gum base ingredients. The gum base is typically mixed with powdered sugar and other ingredients, such as corn syrup, to make the chewing gum composition. However, even when the gum base is melted and mixed with the other ingredients, the typical chewing gum composition has such a high viscosity that it cannot be poured as a fluid and deposited into a mold. Sugarless chewing gum formulations are also known, but have basically the same consistency as sugar-containing formulations. Of course, modifications to the chewing gum composition can be made to make it more fluid. However, compositional changes that result in a product which is not acceptable from a texture, chew and flavor delivery standpoint will not find acceptance in the marketplace. As a result, it has not been commercially viable to make chewing gum products using a deposition process, and therefore it has not been commercially viable to make intricately shaped chewing gum products, especially products with more than one color layer.

Hence, there is a need for chewing gum products with intricate shapes that still have the texture and chew characteristics of chewing gum, and compositions and methods that can be used to make chewing gum products with intricate shapes.
US3912817 relates to a chewing gum having a skin and a nougat-like interior formed by heating and then pouring or extruding into the final desired form, cooled and permitted to age. US4479969 relates to a chewing gum comprising a lactose-hydrolzed whey or whey fraction that replaces all or part of the soluble sweetner, emulsifier and plasticizer components of conventional chewing gum formulations.

### SUMMARY OF THE INVENTION

The present invention relates to A method of making a shaped chewing gum product comprising: a) mixing a bulk sweetener syrup, gum base, powdered bulk sweetener and a soluble protein together at a temperature of at least about 55°C to form a heated composition, the heated composition comprising between about 10% and about 80% bulk sweetener syrup; b) introducing the heated composition into the cavity having a desired shape so as to fill into at least a portion of the shape of the cavity; c) cooling the heated composition to a temperature at which the composition maintains the shape of the at least portion of the cavity to form said shaped chewing gum product; and d) separating the shaped chewing gum product from the cavity, the product having a moisture content of at least about 4%. The present invention also provides a chewing gum composition capable of being deposited to form chewing gum products having intricate shapes, the composition comprising: a) 12% to 35% gum base; b) 10% to 80% bulk sweetener syrup; c) 10% to 78% powdered bulk sweetener; and d) 0.1 % to 6% soluble protein; e) wherein the composition contains less than 10% moisture, and has a viscosity of less than 20 Pa-sec at a temperature of 65°C and forms a product which has the soft typical textural properties of conventional bubble gum.

Accordingly, the present invention provides compositions for, and methods of making, chewing gum products that can be made by a deposition process, and hence that can be made with intricate shapes in a commercially viable manner.

In one aspect, the invention is a method of making a shaped chewing gum product comprising mixing a bulk sweetener syrup, gum base, powdered bulk sweetener and a soluble protein together at a temperature of at least about 55°C to form a heated composition, the heated composition comprising between about 10% and about 80% bulk sweetener syrup; introducing the heated composition into the cavity having a desired shape so as to fill into at least a portion of the shape of the cavity; cooling the heated composition to a temperature at which the composition maintains the shape of the at least portion of the cavity to form the shaped chewing gum product; and separating the shaped chewing gum product from the cavity, the shaped product having a moisture content of at least about 4%.

In another aspect, the invention is a chewing gum composition capable of being deposited to form chewing gum products having intricate shapes, the composition comprising 12% to 35% gum base; 10% to 80% bulk sweetener syrup; 10% to 78% powdered bulk sweetener; and 0.1% to 6% soluble protein; wherein the composition contains less than 10% moisture, preferably less than 6% moisture, and has a viscosity of less than 20 Pa-sec at a temperature of 65°C, and forms a product which has the soft typical textural properties of conventional bubble gum.

It has been discovered that adding soluble proteins to the chewing gum composition, and using a gum base with correct properties, the viscosity of the chewing gum composition will remain sufficiently low so that the composition can be deposited and will freely flow into intricate shaped molds or depressions made in a bed of starch and thereby produce chewing gum products having intricate shapes. On the other hand, the resulting products form a bolus when consumed that has the same chew characteristics as conventional chewing gum.

These and other advantages of the invention, as well as the invention itself, will be more easily understood in view of the attached drawings.

### BREIF DESCRIPTION OF DRAWINGS

Figure 1 is a perspective view of a first embodiment of the present invention showing a two-layer deposited chewing gum product.

Figure 2 is a perspective view of a second embodiment of the present invention showing a second two-layer deposited chewing gum product.

Figure 3 is a perspective view of a third embodiment of the present invention showing a third two-layer deposited chewing gum product.

Figure 4 is a cross-sectional view of a mold used to make the product of Figure 3.

Figure 5 is a cross-sectional view of the mold of Figure 4 having a first layer of chewing gum product deposited therein.

Figure 6 is a cross-sectional view of the mold of Figure 4 having a both the first and second layers of chewing gum product deposited therein.

### DETAILED DESCRIPTION OF THE DRAWINGS AND PREFERRED EMBODIMENTS

The present invention will now be further described. In the following passages, different aspects of the invention are defined in more detail Each aspect so defined may be combined with any other aspect or aspects unless clearly indicated to the contrary. In particular, any feature indicated as being preferred or advantageous may be combined with any other feature or features indicated as being preferred or advantageous. The term "chewing gum" as used herein also includes bubble gum and the like. The term "bulk sweetener" as used herein refers to sugars, sugar alcohols and other bulk sweeteners, and combinations thereof, which are typically used for sweetening and/or bulking properties in confectioneries. Unless otherwise indicated, all percentages are given in weight percent.

"Intricate shape" as used herein and in the claims means a shape of a chewing gum product in which the surface is not plain, but rather has one or more of the following attributes: a) concavities; b) compound curves that do not define product edges; c) convex surfaces having acute angles or small radii (less than one third the dimension of the gross piece size) that do not define product edges; d) one or more curved regions having variable radii; and e) product edges that are irregular or not substantially defined by simple geometric shapes.

Of course, the product of the present invention can be made into shapes that are not intricate. For example, any shape that can be made in a bed of starch, such as the shapes of various gummy confectionaries, can be used for the shapes of the products of the present invention.

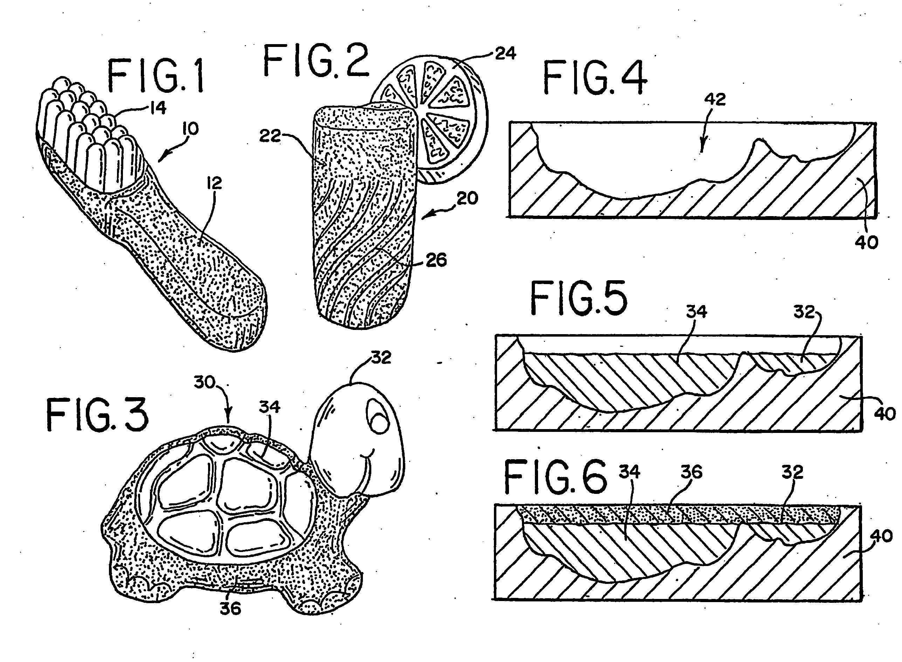

Figures 1-3 show perspective views of embodiments of chewing gum products of the present invention. Of course, many other product shapes are also within the scope of the invention. In particular, shapes suitable for specific holidays, such as Jack o' lanterns, ghosts, vampire teeth and skeletons for Halloween, leprechauns for St. Patrick's Day, etc., are especially suitable for the present invention.

Figure 1 shows a toothbrush shaped chewing gum product 10. In the represented example, the handle 12 of the toothbrush and the bristle portion 14 may be made out of separate layers, preferably of different colors, of chewing gum composition. For example, the handle 12 may be brown, and the bristle portion 14 white. The detail that is shown in the bristle portion 14 of Figure 1 is a good example of the intricate shape that is possible with the present invention. Of course individual bristles will not be identifiable, but as shown the tufts of the bristle portion are clearly discernable. In this embodiment, the bristle portion is made by depositing a white chewing gum composition into the portion of the mold shape forming the bristles 14 and a brown chewing gum composition is poured on top of the first white material and into the portion of the depression that forms the handle 12.

Figure 2 shows a second chewing gum product 20 in the shape of a drinking glass 22 with a slice of a lemon 24 on the edge of the glass 22. Intricate patterns 26 can be formed in the surface of the drinking glass 20, and the slice of lemon 24 can be molded such that the sections of the lemon are clearly discernable. Further, in this embodiment the lemon slice 24 can be molded from a yellow colored chewing gum composition, while the rest of the product, depicting the drinking glass 22, is made from a contrasting color of chewing gum composition, such as dark green. In this embodiment, if desired, different flavors can be included in the different colored compositions, so that the yellow lemon slice 24 is lemon flavored, and the green drinking glass 22 is lime flavored. In this embodiment the green chewing gum composition is deposited first, filing almost the entire depression, and then the yellow composition is deposited in on the top corner of the drinking glass 22 and flows over into the portion of the depression that is used to form the lemon slice 24.

Figure 3 shows a turtle shaped chewing gum product 30. As with the other products, the turtle product 30 is an intricate shape, with the individual sections of the shell and facial features being distinctly visible. Figures 4-6 show the cross section of a mold used in the process by which the turtle product 30 is formed. A bed of starch material 40 has a depression made in it which is a positive (not shown) of the shape of the turtle. The cavity or depression 42 remains after removal of the positive from the bed of starch 40. A first chewing gum composition of the present invention is then deposited in the lower portion of the depression 42, as shown in Figure 5. In this design, the head 32 and shell 34 of the turtle are both made of the same material, which may be a yellow color for instance. Of course, since the part of the depression forming the head 32 is separated from the portion forming the shell 34, two different compositions, having different colors, could be deposited in these two portions of the depression 42. After this first layer is deposited, as second layer 36 is deposited, covering over the exposed back portions of the head 32 and shell 34, and forming the body, feet and neck of the turtle product 30. In this instance, these portions may be a light green in color. Different flavors may or may not be used in the different portions. The second layer may be deposited while the first layer is still fluid, or it may be deposited after the first layer has already started to solidify. After both layers have cooled, the starch bed 40 is dumped into a sifter that separates the powdered starch material from the product 30. The starch material can then be reused, and the product 30 can be de-dusted or otherwise prepared for packaging and sale.

As indicated above, a method has been discovered to provide a low viscosity to a chewing gum composition so that it can be deposited and still make intricate shapes. It was discovered that even with a chewing gum base with a low viscosity was used, when a lot of powdered bulk sweetener was added to the composition, the mass lost fluidity and behaved more like a viscoelastic product, and with a viscosity that is highly dependent on shear rate. It was then discovered that the addition of soluble proteins made a radical change in the rheology of the product.

One method of the present invention includes the following general steps. First, a bulk sweetener syrup, soluble protein, gum base and powdered bulk sweetener are mixed together at a temperature of about 55°C to about 65°C to form a heated composition. Meanwhile, at least one depression is made in a bed of powder material. The depression has a desired shape. After the composition is heated, or is otherwise fluid, it is deposited into the depression at a temperature at which the composition will fill into at least a portion of the shape of the depression. As noted above, this composition may be deposited in just the lower section of the mold if a multi-layer product is to be formed. Next the fluid composition is allowed to set up, such as by cooling, to a consistency at which the composition maintains the shape of the at least portion of the depression to form the deposited chewing gum product. Finally, the deposited chewing gum product is separated from the powder material. The shaped product may contain at least about 4% moisture, and could be as high as 14% moisture. The product may have a density of at least about 1.1 g/cc, and more typically a density of between about 1.2 and about 1.4 g/cc.

The gum base may be a low viscosity regular chewing gum base, or may comprise a low viscosity bubble gum base. The heated composition comprises about 12% to about 35% gum base, more preferably about 15% to about 35% gum base. The gum base may have a ring and ball softening point below 70°C, more preferably below 60°C, measured according to ASTM E28-92. The preferred gum base has a viscosity at 100°C below 5,000 centipoise, more preferably below 3,000 centipoise; measured by a Haake PK100 rotational viscometer (cone & plate), with a PK-11° sensor. A preferred gum base is SHAPE gum base, available from CAFOSA GUM S.A., Calabria, 267-08029, Barcelona, Spain.

The bulk sweetener syrup may comprise one or more sugars, or comprise one or more polyols for sugarless formulas. If it comprises sugars, the sugars may be selected from the group consisting of fructose, corn syrup, corn syrup solids (sometimes referred to as glucose syrup solids), sucrose, starch hydrolysates, maltodextrins, maltose, dextrin, invert sugar, levulose, galactose, and the like, alone or in combination. If the bulk sweetener syrup is sugarless, it may comprise sugar alcohols selected from the group consisting of sorbitol, maltitol, xylitol, erythritol, lactitol, hydrogenated starch hydrolysates, hydrogenated isomaltulose (also known as isomalt), mannitol, and mixtures thereof. Likewise, if the product is a sugar product, the powdered bulk sweetener may be selected from the group consisting of fructose, sucrose, starch hydrolysates (such as corn syrup solids), maltodextins and mixtures thereof, and if it is sugarless, the powdered bulk sweetener may comprise a sugar alcohol selected from the group consisting of sorbitol, maltitol, xylitol, erythritol, lactitol, hydrogenated starch hydrolysates, hydrogenated isomaltulose, mannitol, and mixtures thereof. In an embodiment, the bulk sweetener syrup comprises fructose and the powdered bulk sweetener is sucrose.

The heated composition may comprise about 10% to about 80% bulk sweetener syrup, more preferably about 10% to about 50% bulk sweetener syrup, and most preferably about 10% to about 36% bulk sweetener syrup. The heated composition may comprise about 10% to about 80% powdered bulk sweetener and about 0.1% to about 10%, more preferably 0.5% to about 6% soluble protein. The soluble protein may be selected from the group consisting of wheat gluten, soy protein isolate, hydrolyzed milk protein, hydrolyzed whey protein, reduced lactose whey, whey protein concentrate, gelatin, and combinations thereof.

Gelatin may also be used in the product to impart gelling properties. If it is used, the gelatin can be used as the protein, or in addition to another soluble protein. In the gelatin is used for gelling properties, the heated composition may comprise about 2% to about 5% gelatin. The gelatin may be one with a Bloom of 100 or higher.

The heated composition may also comprise between about 0.01% and about 5% of an emulsifier, about 0.01% and about 5% of a softener, between about 0.1% and about 5% flavor and between about 0.01% and about 2% color. The flavor may be any chewing gum flavor. However, preferred flavors are those that can withstand temperatures at which the product is made and deposited, such as 65°C. The flavoring agents may comprise essential oils, synthetic flavors, or mixtures including but not limited to oils derived from plants and fruits such as citrus oils, fruit essences, peppermint oil, spearmint oil, clove oil, oil of wintergreen, anise and the like. Artificial flavoring components are also contemplated for use in chewing gum products of the present invention. Typical artificial fruit flavors include fruit esters and fruit essential oils. In addition, fruit flavored products require the use of food acids to give the desired sensory attributes. Those skilled in the art will recognize that natural and artificial flavoring agents may be combined in any sensorially acceptable blend. All such flavors and flavor blends are contemplated by the present invention.

The emulsifier may be selected from the group consisting of lecithin, mono-and diglycerides, acetylated monoglycerides, and mixtures thereof. The softener may be selected from the group consisting of glycerin, sorbitol solution, propylene glycol, and mixtures thereof. High-intensity sweeteners, Such as salts of acesulfame, like acesulfame K; alitame; sucralose; glycyrrhizin; saccharin and its salts; aspartame; N-substituted APM derivatives such as neotame; cyclamic acid and its salts, glycyrrhizinate, dihydrochalcones; thaumatin; monellin, sweetener-sweetener salts, such as aspartame-acesulfame salt; and the like, alone or in combination, may optionally be included.

In one method, the bulk sweetener syrup, gum base and powdered bulk sweetener are mixed together using high shear mixing in a tempered mixer. The bulk sweetener syrup, gum base and powdered bulk sweetener may each be heated to a temperature of at least 60°C before being mixed together, and deposited at a temperature in the range of between about 50°C and about 65°C. In an embodiment, the composition contains less than 10% moisture and has a viscosity of less than 20,000 centipoise at a temperature of 60°C, preferably in the range of 10,000-17,000 centipoise at a temperature of 60°C, measured using a Haake VT 500 viscometer with a SVII sensor.

As mentioned above, the heated composition may be deposited in a first layer so as to only fill part of the depression, and a second heated composition different than the first deposited heated composition but also comprising a gum base is deposited in the depression on top of the first layer. In that embodiment, the second heated composition may be exactly the same as the first heated composition, and differ only its color and/or flavor. This produces a multi-layer shaped chewing gum product. The first layer comprises a first cooled mixture of bulk sweetener syrup, powdered bulk sweetener and gum base previously heated and mixed into a first homogeneous composition. The second layer comprises a second cooled mixture of bulk sweetener syrup, powdered bulk sweetener and gum base previously heated and mixed into a second homogeneous composition different from the first composition. The first and second layers are adhered together forming the product. Of course this product has an intricate shape, and more than two layers can be formed in the product. In a multi-layer product, preferably the layers are each of a different color. Co-extrusion techniques can also be used to form unique designs using equipment known to those skilled in the art. In addition, the mold cavity may be partially filled, either before or after depositing the gum composition, with other confectionery material.

Typically multiple depressions are made in the bed of powdered material and each depression has the heated composition deposited into it. The depressions in one bed may all be of the same shape, or they may be of different shapes. Typically the product has a piece weight of between about 4 and about 12 grams, more preferably between about 7 and about 8 grams. If the product has a piece weight over about 14 grams, it may be preferable to reduce the gum base content in the heated composition so that the bolus left after the soluble components have been chewed from the product is of a more easily handled size.

It should be understood that other ways of shaping the products are within the scope of the present invention. The composition; while being particularly well suited for deposition forming, may otherwise be introduced into a cavity of a mold and take on the shape of the cavity when it cools or otherwise sets up. The product may be deposited into a mold that will remain as part of the packaging for the product, such as a shaped blister, which is covered with a film or foil, and sold with the product inside. Alternatively, the product could be deposited, cooled and ejected from reusable molds, such as polycarbonate molds, flexible rubber molds, coated cast aluminum molds, etc.

The following example is given to illustrate the invention, and is not to be considered as limiting.

### Example 1

The following formula was used to make a 1kg batch of depositable heated chewing gum:

| **Raw material** | **%** |
|---|---|
| Gum Base | 28.00 |
| Lecithin | 0.20 |
| Corn Syrup | 36.00 |
| Reduced Lactose Whey | 1.60 |
| Glycerin | 1.00 |
| Powdered Sugar | 32.00 |
| Liquid Flavor | 0.68 |
| Dry Flavor | 0.52 |
| TOTAL | 100.00 |

| | |
|---|---|
| Gum base - SHAPE available from Cafosa Gum S.A. Barcelona Spain. Lecithin - Topcithin available from Degussa Texturant Systems LLC, Decatur, IL. Corn syrup - Hi-Sweet 42, 70.5 - 71.5 solids, available from Roquette America, Keokuk, IA. Reduced lactose whey - available from Grande Custom Products, Lomira, WI. Liquid Flavor - N&A Orange SN383536-63f available from IFF, Union Beach, NJ. Dry flavor - N&A Orange Dry SN383540 available from IFF, Union Beach, NJ. | |

The gum base was melted at 140°F (60°C), which made it fluid. The gum base, corn syrup and lecithin were added to a bowl or pot at 140°F (60°C). These were mixed with a wire whip to form a homogenous mass having the appearance of an emulsion. The sugar, color, reduced lactose whey and powder flavor were added and mixed for an additional 1 minute. Finally, the liquid flavor was added and mixed for an additional 30 seconds. The product had a temperature of 140-150°F (60-65°C) and was deposited into depressions made in a starch bed and produced high quality, intricate shaped chewing gum products, using various shapes with sizes of 5-7 grams.

Variations in the moisture content of the finished gum was done by increasing the water content by adding higher amounts of the corn syrup or by adding water directly. Variations in the moisture content of the gum were between about 6% and about 14%. The observations were that, if the source of the moisture was corn syrup or sorbitol syrup, and the moisture content was above 11%, the finished gum remained soft after cooling. This high moisture gum could be made firmer by adding gelatin into the mix, but after cooling the Wₐ of the gum was high and the samples would loose moisture if exposed. As the moisture evaporated from the gum, sugar would crystallize on the surface giving a poor appearance. It is felt that the better products are with moisture content of 6-8%.

The effect of a gelling agent is that makes the finished gum piece firmer, and it gives the chewing character a smooth, slippery chewing texture.

Many different Bloom strength gelatins were tested as part of this development work. All the gelatins were of a bovine source to avoid any difficulties with some religious beliefs. The gelatins were all dissolved in water at a one-part gelatin and two-parts water, and can be used immediately after dissolving, or after cooling and allowing the gelatin to form a gel. There was no need to "rest" the gelatin/water mix to hydrate the gelatin. One test was done in a 1:1 water dissolution but it was felt that this was too difficult to do on a continuous basis. Efforts to dissolve the gelatin into the corn syrup also met with difficulties.

Higher Bloom strength gelatins gave higher viscosities to the gum and it is felt that for this reason it is better to use low Bloom strength gelatin in the product

While the invention has been described in conjunction with products that are completely made of the chewing gum composition, it should be understood that the products can also be a composite of the chewing gum composition and another material, such as a confection or a filling, like a jelly, used in a confection. For example, the deposited chewing gum can be given a center filling, such as a boiled hard candy co-deposited with the chewing gum composition. Further, the chewing gum itself may form an internal portion of a composite product, such as a hard candy with a chewing gum center. Examples 2-4 provide examples of co-deposited products, in which the deposited gum may be inside the other confectionery, surrounding the other confectionery, or in one or more layers with the other confectionery.

### Example 2 - Co-deposited Chewing Gum and Taffy

A co-deposited product is made with the fluid gum of Example 1 and a taffy-type confectionery made as follows:

| **Ingredients** | **%** |
|---|---|
| First Composition | |
| Sugar | 42.00 |
| Corn Syrup - 42 D.E. | 35.00 |
| Water | 10.00 |
| Sodium Citrate | 0.10 |
| Maltodextrin - 18 D.E. | 0.70 |
| Lecithin | 0.30 |
| Color | 0.05 |

| Gelatin Mixture | |
|---|---|
| Gelatin - 150 Bloom | 1.00 |
| Water | 2.00 |
| Powdered Citric Acid | 1.00 |
| Fondant Sugar | 1.10 |
| Vegetable Fat | 6.50 |
| Flavor | 0.25 |
| TOTAL | 100.00 |

First, the gelatin is dissolved in water. Next the first seven ingredients are cooked to 225°F (107°C) to form the first composition (cooked candy). The gelatin/water is added to the cooked candy and this mixture is whipped or pulled to incorporate air. Finally the powdered citric acid, fondant sugar, vegetable oil and flavor are added after the whipping step. The total product is then loaded into a feeding hopper for co-depositing hot with the fluid gum composition. For a softer taffy part of the product, the cook temperature of the cooked candy can be reduced. The moisture content of the taffy can be altered by altering the cook temperature to meet viscosity needs of any particular depositor that is used.

### Example 3 - Co-deposited Chewing Gum and Cooked/Hard Candy

A co-deposited cooked/hard candy product is made with the fluid gum of Example 1 and a cooked/hard candy confectionery made as follows:

| **Ingredients** | **%** |
|---|---|
| Sugar | 63.72 |
| Corn Syrup - 42 D.E. | 42.48 |
| Net Water loss | -6.50 |
| Color and Flavor | 0.30 |
| TOTAL | 100.00 |

The sugar, corn syrup and enough water to dissolve the sugar are combined. This water, and some of the water in the corn syrup, evaporate during cooking to produce the net water loss. The material is cooked to a temperature of 284 - -293°F (140-145°C). For a more glassy candy, try to prevent crystal growth by minimizing shear before loading into a feeder hopper for deposition with the fluid gum composition. For crystallized candy, increase the sugar content and reduce the amount of corn syrup. For a softer product, reduce the cook temperature.

Example 4 - Co-deposited Chewing Gum and Caramel Candy A co-deposited caramel candy product is made with the fluid gum of Example 1 and caramel candy confectionery made as follows:

| **Ingredients** | **%** |
|---|---|
| Butter or Margarine | 20.68 |
| Brown Sugar | 46.53 |
| Light Cream | 41.36 |
| Corn Syrup - 42 D.E. | 20.03 |
| Net Water loss | -29.10 |
| Color and Flavor | 0.50 |
| TOTAL | 100.00 |

Melt butter or margarine, add the rest of the ingredients, and cook to a temperature of about 255 - 260°F (124-127°C). The water loss comes from the butter or margarine, light cream and corn syrup. Transfer the product to the feeder hopper in the depositor. For a softer product, reduce the cook temperature.

It should be understood that various changes and modifications to the presently preferred embodiments described herein will be apparent to those skilled in the art. Such changes and modifications can be made without departing from the spirit and scope of the present invention and without diminishing its intended advantages. For example, the product can be made with multiple colors but not necessarily in layers. Two materials of different colors could be deposited simultaneously, or alternatively, and in swirls or other patterns. It is therefore intended that such changes and modifications be covered by the appended claims.

## Claims

1. A method of making a shaped chewing gum product comprising:
a) mixing a bulk sweetener syrup, gum base, powdered bulk sweetener and a soluble protein together at a temperature of at least 55°C to form a heated composition, the heated composition comprising between 10% and 80% bulk sweetener syrup;
b) introducing the heated composition into the cavity having a desired shape so as to fill into at least a portion of the shape of the cavity;
c) cooling the heated composition to a temperature at which the composition maintains the shape of the at least portion of the cavity to form said shaped chewing gum product; and
d) separating the shaped chewing gum product from the cavity, the product having a moisture content of at least about 4%.

2. The method of claim 1 comprising:
a) mixing between 10% and 50% bulk sweetener syrup, 20% to 40% gum base, 20% to 69% powdered bulk sweetener and 0.1 % and 20% soluble protein together to form a heated composition;
b) depositing the heated composition into a depression in a bed of powder material at a temperature at which the heated composition will fill into at least a portion of the shape of the depression;
c) allowing the heated composition to set up to a consistency wherein the composition maintains the shape of the at least portion of the depression to form said deposited chewing gum product; and
d) separating the deposited chewing gum product from the powder material.

3. The method of claim 1 or 2 wherein said heated composition comprises 0.1% to 6% soluble protein.

4. The method of any one of claims 1 to 3 wherein said gum base comprises a bubble gum base.

5. The method of any one of claims 1 to 4 wherein said powdered bulk sweetener comprises between 10% and 80% of the heated composition; said gum base comprises between about 12% and about 30% of the heated composition; and said bulk sweetener syrup comprises between about 10% and about 50% of the heated composition.

6. The method of any one of claims 1 to 5 wherein said soluble protein is selected from the group consisting of wheat gluten, soy protein isolate, hydrolyzed milk protein, hydrolyzed whey protein, reduced lactose whey, whey protein concentrate, gelatin, and combinations thereof.

7. The method of claim 6 wherein said soluble protein comprises whey protein and is used at a level of between 0.4% and 1.5% of the heated composition.

8. The method of any one of claims 1 to 7 wherein said heated composition comprises 0.1 % to 5% gelatin.

9. The method of claim 8 wherein the gelatin is in addition to another soluble protein.

10. The method of any one of claims 1 to 9 wherein said bulk sweetener syrup comprises high fructose corn syrup.

11. The method of any one of claims 1 to 10 wherein the bulk sweetener in said bulk sweetener syrup comprises a sugar selected from the group consisting of fructose, dextrose, corn syrup solids, sucrose, starch hydrolysates, maltodextrins and mixtures thereof.

12. The method of any one of claims 1 to 11 wherein said bulk sweetener syrup comprises a sugarless bulk sweetener syrup selected from the group consisting of sorbitol, maltitol, xylitol, erythritol, lactitol, hydrogenated starch hydrolysates, hydrogenated isomaltulose, mannitol, and mixtures thereof.

13. The method of any one of claims 1 to 12 wherein said heated composition is deposited in a first layer so as to only fill part of said depression, and a second heated composition different than the first deposited heated composition but also comprising a gum base is deposited in the depression on top of said first layer.

14. The method of claim 13 wherein said second heated composition differs from the first heated composition in color or flavor.

15. The method of any one of claims 1 to 14 wherein said shaped chewing gum product comprises an intricate shape.

16. A chewing gum composition capable of being deposited to form chewing gum products having intricate shapes, the composition comprising:
a) 12% to 35% gum base;
b) 10% to 80% bulk sweetener syrup;
c) 10% to 78% powdered bulk sweetener; and
d) 0.1 % to 6% soluble protein;
e) wherein the composition contains less than 10% moisture, and has a viscosity of less than 20 Pa-sec at a temperature of 65°C and forms a product which has the soft typical textural properties of conventional bubble gum.

17. The composition of claim 16 wherein said composition comprises 15% to 35% gum base, 10% to 20% bulk sweetener syrup, and 30% to 80% powdered bulk sweetener.

18. The composition of claim 16 wherein said composition comprises 12% to 30% gum base, 30% to 80% bulk sweetener syrup, and 10% to 40% powdered bulk sweetener, and wherein the bulk sweetener syrup comprises, on a dry basis, 30% to 70% sucrose and 70% to 30% corn syrup solids, and 4% to 15% water.

19. The composition of any one of claims 16 to 18 wherein the product formed from the composition has an intricate shape having one or more of the following attributes:
a) concavities;
b) compound curves that do not define product edges;
c) convex surfaces having acute angles;
d) convex surfaces having radii less than one third the dimension of the gross piece size that do not define product edges;
e) one or more curved regions having variable radii; and
f) product edges that are irregular or not substantially defined by simple geometric shapes.

20. The composition of any one of claims 16 to 19 wherein the product formed from the composition maintains its shape at a temperature of 35°C.

## Patentansprüche

1. Verfahren zum Herstellen eines geformten Kaugummiprodukts, umfassend:
a) Zusammenmischen einer Süßmittelsirupmasse, eines Gummigrundstoffs, einer pulverförmigen Süßmittelmasse und eines löslichen Proteins bei einer Temperatur von mindestens 55 °C, um eine erhitzte Zusammensetzung zu bilden, wobei die Zusammensetzung zwischen 10% und 80% Süßmittelsirupmasse umfasst;
b) Einleiten der erhitzten Zusammensetzung in einen Hohlraum mit einer gewünschten Form, um mindestens einen Teil der Form des Hohlraums zu befüllen;
c) Kühlen der erhitzten Zusammensetzung auf eine Temperatur, bei welcher die Zusammensetzung die Form von zumindest einem Teil des Hohlraums beibehält, um das geformte Kaugummiprodukt zu bilden; und
d) Trennen des geformten Kaugummiprodukts von dem Hohlraum, wobei das Produkt einen Feuchtegehalt von mindestens etwa 4% aufweist.

2. Verfahren nach Anspruch 1, umfassend:
a) Zusammenmischen von zwischen 10% und 50% Süßmittelsirupmasse, 20% bis 40% Gummigrundmasse, 20% bis 69% pulverförmiger Süßmittelmasse und 0,1% und 20% löslichem Protein, um eine erhitzte Zusammensetzung zu bilden;
b) Absetzen der erhitzten Zusammensetzung in einer Vertiefung in einem Bett aus pulverförmigem Material bei einer Temperatur, bei welcher die erhitzte Zusammensetzung zumindest einen Teil der Form der Vertiefung befüllen wird;
c) Aushärtenlassen der erhitzten Zusammensetzung bis zu einer Konsistenz, worin die Zusammensetzung die Form von zumindest einem Teil der Vertiefung beibehält, um das abgesetzte Kaugummiprodukt zu bilden; und
d) Trennen des abgesetzten Kaugummiprodukts von dem pulverförmigen Material.

3. Verfahren nach Anspruch 1 oder 2, worin die erhitzte Zusammensetzung 0,1 % bis 6% lösliches Protein umfasst.

4. Verfahren nach einem der Ansprüche 1 bis 3, worin der Gummigrundstoff ein Bubblegumgrundstoff umfasst.

5. Verfahren nach einem der Ansprüche 1 bis 4, worin die pulverförmige Süßmittelmasse zwischen 10% und 80% der erhitzten Zusammensetzung umfasst; wobei der Gummigrundstoff zwischen etwa 12% und etwa 30% der erhitzten Zusammensetzung umfasst; und worin die Süßmittelsirupmasse zwischen etwa 10% und etwa 50% der erhitzten Zusammensetzung umfasst.

6. Verfahren nach einem der Ansprüche 1 bis 5, worin das lösliche Protein ausgewählt wird aus der Gruppe, bestehend aus Weizengluten, Sojaproteinisolat, hydrolysiertem Milchprotein, hydrolysiertem Molkeprotein, reduzierter Lactosemolke, Molkeproteinkonzentrat, Gelatine und Kombinationen davon.

7. Verfahren nach Anspruch 6, worin das lösliche Protein Molkeprotein umfasst und in einem Gehalt von zwischen 0,4% und 1,5% der erhitzten Zusammensetzung verwendet wird.

8. Verfahren nach einem der Ansprüche 1 bis 7, worin die erhitzte Zusammensetzung 0,1% bis 5% Gelatine umfasst.

9. Verfahren nach Anspruch 8, worin die Gelatine zusätzlich zu einem anderen löslichen Protein vorliegt.

10. Verfahren nach einem der Ansprüche 1 bis 9, worin die Süßmittelsirupmasse Maissirup mit hohem Fruktosegehalt umfasst.

11. Verfahren nach einem der Ansprüche 1 bis 10, worin die Süßmittelmasse in der Süßmittelsirupmasse einen Zucker umfasst, ausgewählt aus der Gruppe, bestehend aus Fructose, Dextrose, Maissirupfeststoffen, Sucrose, Stärkehydrolysaten, Maltodextrinen und Gemischen davon.

12. Verfahren nach einem der Ansprüche 1 bis 11, worin die Süßmittelsirupmasse eine zuckerfreie Süßmittelsirupmasse umfasst, ausgewählt aus der Gruppe, bestehend aus Sorbitol, Maltitol, Xylitol, Erythritol, Lactitol, hydrierten Stärkehydrolysaten, hydrierter Isomaltulose, Mannitol und Gemischen davon.

13. Verfahren nach einem der Ansprüche 1 bis 12, worin die erhitzte Zusammensetzung in einer ersten Schicht abgesetzt wird, um nur einen Teil der Vertiefung zu füllen, und worin eine zweite erhitzte Zusammensetzung, die von der ersten abgesetzten Zusammensetzung verschieden ist, jedoch auch einen Gummigrundstoff umfasst, in der Vertiefung auf der Oberseite der ersten Schicht abgesetzt wird.

14. Verfahren nach Anspruch 13, worin die zweite erhitzte Zusammensetzung sich von der ersten erhitzten Zusammensetzung bezüglich Farbe oder Geschmack unterscheidet.

15. Verfahren nach einem der Ansprüche 1 bis 14, worin das geformte Kaugummiprodukt eine komplizierte Form umfasst.

16. Kaugummizusammensetzung, die abgesetzt werden kann zur Bildung eines Kaugummiprodukts mit komplizierten Formen, wobei die Zusammensetzung umfasst:
a) 12% bis 35% Gummigrundstoff;
b) 10% bis 80% Süßmittelsirupmasse;
c) 10% bis 78% pulverförmige Süßmittelmasse; und
d) 0,1% bis 6% lösliches Protein;
e) worin die Zusammensetzung weniger als 10% Feuchte enthält und eine Viskosität von weniger als 20 Pa·sec bei einer Temperatur von 65°C aufweist und welche ein Produkt bildet, das die weichen typischen strukturellen Eigenschaften von herkömmlichem Bubblegum aufweist.

17. Zusammensetzung nach Anspruch 16, worin die Zusammensetzung 15% bis 35% Gummibasis, 10% bis 20% Süßmittelsirupmasse und 30% bis 80% pulverförmige Süßmittelmasse umfasst.

18. Zusammensetzung nach Anspruch 16, worin die Zusammensetzung 12% bis 30% Gummigrundstoff, 30% bis 80% Süßmittelsirupmasse und 10% bis 40% pulverförmige Süßmittelmasse umfasst, und worin die Süßmittelsirupmasse auf einer Trockenmassebasis 30% bis 70% Sucrose und 70% bis 30% Maissirupfeststoffe und 4% bis 15% Wasser umfasst.

19. Zusammensetzung nach einem der Ansprüche 16 bis 18, worin das Produkt, das aus der Zusammensetzung gebildet wird, eine komplizierte Form mit einem oder mehreren der folgenden Merkmale aufweist:
a) Wölbungen;
b) Verbindungsrundungen, die keine Kanten des Produkts definieren;
c) konvexe Oberflächen mit spitzen Winkeln;
d) konvexe Oberflächen mit Radien, die kleiner sind als ein drittel der Abmessung der Bruttostückgröße, die keine Produktkanten definieren;
e) eine oder mehrere gerundete Regionen mit variablen Radien; und
f) Produktkanten, die unregelmäßig oder nicht wesentlich definiert sind durch einfache geometrische Formen.

20. Zusammensetzung nach einem der Ansprüche 16 bis 19, worin das Produkt, das aus der Zusammensetzung gebildet ist, seine Form bei einer Temperatur von 35 °C beibehält.

## Revendications

1. Procédé de fabrication d'un produit de gomme à mâcher moulé comprenant le fait :
a) de mélanger entre eux un sirop d'édulcorant en vrac, une base de gomme, un édulcorant en poudre en vrac et une protéine soluble à une température de 55°C au moins pour former une composition chauffée, la composition chauffée comprenant entre 10 % et 80 % du sirop d'édulcorant en vrac ;
b) d'introduire la composition chauffée dans la cavité ayant une forme souhaitée de sorte à remplir au moins une partie de la forme de la cavité ;
c) de refroidir la composition chauffée à une température à laquelle la composition garde la forme de l'au moins une partie de la cavité pour former ledit produit de gomme à mâcher moulé ; et
d) séparer le produit de gomme à mâcher moulé de la cavité, le produit ayant une teneur en eau d'au moins 4% environ.

2. Procédé de la revendication 1, comprenant le fait :
a) de mélanger entre eux 10 % à 50 % du sirop d'édulcorant en vrac, 20 % à 40 % de la base de gomme, 20 % à 69 % de l'édulcorant en poudre en vrac et 0,1 % et 20 % de protéines solubles pour former une composition chauffée ;
b) de déposer la composition chauffée dans une dépression dans un lit de matériau en poudre à une température à laquelle la composition chauffée va remplir au moins une partie de la forme de la dépression ;
c) de permettre à la composition chauffée de s'établir à une consistance où la composition garde la forme de l'au moins une partie de la dépression pour former ledit produit de gomme à mâcher déposé ; et
d) de séparer le produit de gomme à mâcher déposé du matériau en poudre.

3. Procédé de la revendication 1 ou 2, dans lequel ladite composition chauffée comprend 0,1 % à 6 % de protéines solubles.

4. Procédé de l'une quelconque des revendications 1 à 3, dans lequel ladite base de gomme comprend une base de gomme à bulles.

5. Procédé de l'une quelconque des revendications 1 à 4, dans lequel ledit édulcorant en poudre en vrac comprend entre 10 % et 80 % de la composition chauffée ; ladite base de gomme comprend entre 12 % environ et 30 % environ de la composition chauffée ; et ledit sirop d'édulcorant en vrac comprend entre 10 % environ et 50 % environ de la composition chauffée.

6. Procédé de l'une quelconque des revendications 1 à 5 dans lequel, ladite protéine soluble est choisie dans le groupe constitué de gluten de froment, d'isolat de protéine de soja, de protéine de lait hydrolysée, de protéine de lactosérum hydrolysée, de protéine lactosérique réduite, de concentré de protéines de lactosérum, de gélatine, et de leurs combinaisons.

7. Procédé de la revendication 6, dans lequel ladite protéine soluble comprend une protéine de lactosérum et est utilisée à un niveau entre 0,4 % et 1,5 % de la composition chauffée.

8. Procédé de l'une quelconque des revendications 1 à 7 dans lequel ladite composition chauffée comprend 0,1 % à 5 % de gélatine.

9. Procédé de la revendication 8, dans lequel la gélatine est en plus d'une autre protéine soluble.

10. Procédé de l'une quelconque des revendications 1 à 9, dans lequel ledit sirop d'édulcorant en vrac comprend un sirop de maïs à forte teneur en fructose.

11. Procédé de l'une quelconque des revendications 1 à 10, dans lequel l'édulcorant en vrac dans ledit sirop d'édulcorant en vrac comprend un sucre choisi dans le groupe constitué de fructose, de dextrose, de matières solides de sirop de maïs, de saccharose, d'hydrolysats d'amidon, de maltodextrines et de leurs mélanges.

12. Procédé de l'une quelconque des revendications 1 à 11, dans lequel le sirop d'édulcorant en vrac comprend un sirop d'édulcorant en vrac sans sucre choisi dans le groupe constitué de sorbitol, maltitol, xylitol, érythrite, lactitol, hydrolysats d'amidon hydrogénés, isomaltulose hydrogéné, mannitol, et leurs mélanges.

13. Procédé de l'une quelconque des revendications 1 à 12, dans lequel ladite composition chauffée est déposée en une première nappe de sorte à ne remplir qu'une partie de ladite dépression, et une deuxième composition chauffée différente de la première composition chauffée déposée mais comprenant également une base de gomme qui est déposée dans la dépression par dessus ladite première nappe.

14. Procédé de la revendication 13, dans lequel ladite deuxième composition chauffée diffère de la première composition chauffée en couleur ou en arôme.

15. Procédé de l'une quelconque des revendications 1 à 14, dans lequel ledit produit de gomme à mâcher moulé comprend une forme compliquée.

16. Composition de gomme à mâcher pouvant être déposée pour former des produits de gomme à mâcher ayant des formes compliquées, la composition comprenant :
a) 12 % à 35 % de base de gomme ;
b) 10 % à 80 % de sirop d'édulcorant en vrac ;
c) 10 % à 78 % d'édulcorant en poudre en vrac ; et
d) 0,1 % à 6 % de protéines solubles ;
e) la composition contenant moins de 10 % d'humidité, et a une viscosité inférieure à 20 Pa-s à une température de 65°C et forme un produit qui a les propriétés texturales souples typiques d'une gomme à bulles conventionnelle.

17. Composition de la revendication 16, ladite composition comprenant 15 % à 35 % de la base de gomme, 10 % à 20 % du sirop d'édulcorant en vrac, et 30 % à 80 % d'édulcorant en poudre en vrac.

18. Composition de la revendication 16, ladite composition comprenant 12 % à 30 % de la base de gomme, 30 % à 80 % du sirop d'édulcorant en vrac, et 10 % à 40 % de l'édulcorant en poudre en vrac, et le sirop d'édulcorant en vrac comprenant, sur une base sèche, 30 % à 70 % de saccharose et 70 % à 30 % de matières solides de sirop de maïs, et 4 % à 15 % d'eau.

19. Procédé de l'une quelconque des revendications 16 à 18, dans lequel le produit formé de la composition a une forme compliquée ayant un ou plusieurs des attributs suivants :
a) des concavités ;
b) des courbes composées qui ne définissent pas des bords du produit ;
c) des surfaces convexes ayant des angles tranchants ;
d) des surfaces convexes ayant des rayons plus petits que le tiers de la dimension de la taille de la pièce brute qui ne définissent pas des bords du produit ;
e) une ou plusieurs régions courbées ayant des rayons variables ; et
f) des bords de produit qui sont irréguliers ou qui ne sont pas essentiellement définis par de simples formes géométriques.

20. Composition de l'une quelconque des revendications 16 à 19, dans laquelle le produit formé de la composition garde sa forme à une température de 35°C.
